# EUROPEAN PATENT APPLICATION

(11) **EP 2 793 113 A1**
(43) Date of publication of application: **22.10.2014**
(21) Application number: 12857201.3
(22) Date of filing: 06.12.2012
(51) Int. Cl.: G06F 3/048, G06F 3/0346, G06F 3/0488

(54) **DISPLAY DEVICE, USER INTERFACE METHOD AND PROGRAM**

(30) Priority: 15.12.2011 JP 2011274315
(71) Applicant: NTT DOCOMO, INC., Chiyoda-ku Tokyo 100-6150 (JP)
(72) Inventor: MAEDA, Kenichi, Tokyo 100-6150 (JP); TSUIHIJI Daisuke, Tokyo 100-6150 (JP); UEHARA, Tetsuro, Tokyo 150-0022 (JP); SATOU, Michihiro, Tokyo 150-0022 (JP)
(74) Representative: HOFFMANN EITLE
(86) International application number: PCT/JP2012/081671
(87) International publication number: WO 2013/089013

(57) **Abstract**

To provide a user interface with high operability and high browsability.

In a screen showing an overview of plural contents provided by applications, and receiving a selection by a user, an image of a bladed wheel is displayed. On each face of plural blades of the bladed wheel, a content image is assigned. If a swipe operation is performed on the bladed wheel image, the bladed wheel is caused to rotate around its rotary shaft so that content images displayed on the screen are switched.

## Description

### Technical Field

The present invention relates to a GUI (Graphical User Interface).

### Background Art

Known in the art is a GUI for an electronic device such as a mobile phone, which enables a user to browse and select different contents displayed on a single display. For example, in Patent Document 1 a mobile terminal device is proposed that displays a multi-screen, in which different contents are arranged on slave screens. In the mobile terminal device, a slave screen can be selected by use of a touch panel.

### Prior Art Document

### Patent Document

Patent Document 1: JP 2009-135728 A1

### Summary of the Invention

### Problems to be solved by the Invention

However, in the technique disclosed in Patent Document 1, each displayed content is fixed to a slave screen; therefore, a user is not able to switch from a content displayed on a slave screen to another content by a simple operation. Moreover, a user is not able to switch to another content by an intuitive operation.

The present invention has been made in view of the foregoing circumstances, and provides a user interface with high operability and high browsability.

### Means for Solving the Problems

The present invention provides a display device, comprising: a display unit including a display surface that displays an image; an input operation unit including an input operation surface that receives an input operation by an operator through contact via an indicator; and a display control unit that causes the display unit to display a bladed wheel image showing a bladed wheel having plural blades, and that when a predetermined input operation is received by the input operation unit, causes the display unit to display an image showing the bladed wheel in a state of rotation, wherein: the display control unit causes the display unit to display the bladed wheel image so that a rotary shaft of the bladed wheel is parallel to the display surface; and the bladed wheel has a content description area in which a content is described, on a face of at least one of the plural blades.

In a preferred aspect, a side each of the plural blades of the bladed wheel is fixed to the rotary shaft parallel to the rotary shaft.

In another preferred aspect, the bladed wheel has, on a face of the rotary shaft, a content-related information description area in which information related to the content described in the content description area is described.

In another preferred aspect, the bladed wheel has a content description area in which a content is described, on both faces of at least one of the plural blades.

In another preferred aspect, when the display control unit causes the display unit to display an image showing the bladed wheel in a state of rotation, the display control unit increases a speed of the rotation as a number of content description areas in which a content is described increases.

In another preferred aspect, the content description area has a scroll bar; when the input operation received by the input operation unit is a swipe operation, which is an operation of moving the indicator on the input operation surface, and a trajectory of a contact point between the indicator used for the swipe operation and the input operation surface crosses the rotary shaft of the bladed wheel, the display control unit causes the display unit to display an image showing the bladed wheel in a state of rotation; and when the trajectory does not cross the rotary shaft of the bladed wheel, the display control unit causes the display unit to display an image of scrolling a content described in the content description area.

In another preferred aspect, the display device further comprises a tilt angle detecting unit that detects a tilt angle of the display device, and the display control unit causes the display unit to display an image of the bladed wheel rotating in accordance with the tilt angle detected by the tilt angle detecting unit.

The present invention also provides a user interface method implemented in a display device having a display unit including a display surface that displays an image, and an input operation unit including an input operation surface that receives an input operation by an operator via contact with an indicator, the user interface method comprising: causing the display unit to display a bladed wheel image showing a bladed wheel having plural blades; and when a predetermined input operation is received by the input operation unit, causing the display unit to display an image showing the bladed wheel in a state of rotation, wherein: the bladed wheel image is displayed so that a rotary shaft of the bladed wheel is parallel to the display surface; and the bladed wheel has a content description area in which a content is described, on a face of at least one of the plural blades.

The present invention also provides a program executed in a computer of a display device having: a display unit including a display surface that displays an image; and an input operation unit including an input operation surface that receives an input operation by an operator through a contact with an indicator, the program: causing the display unit to display a bladed wheel image showing a bladed wheel having plural blades; and when a predetermined input operation is received by the input operation unit, causing the display unit to display an image showing the bladed wheel in a state of rotation, wherein: the bladed wheel image is displayed so that a rotary shaft of the bladed wheel is parallel to the display surface; and the bladed wheel has a content description area in which a content is described, on a face of at least one of the plural blades.

### Effects of the Invention

According to the present invention, it is possible to provide a user interface having high operability and high browsability.

### Brief Description of the Drawings

Fig. 1 is a diagram showing an appearance of a display device.
Fig. 2 is a block diagram showing a hardware configuration of a display device.
Fig. 3 is a diagram showing an example of a content overview display screen.
Fig. 4 is a diagram showing an example of a bladed wheel.
Fig. 5 is a diagram showing a rotating bladed wheel.
Fig. 6 is a block diagram showing a functional configuration of a control unit.
Fig. 7 is a block diagram showing a functional configuration of a control unit.
Fig. 8 is a flowchart showing a display control procedure carried out by a display device.
Fig. 9 is a flowchart showing a display control procedure carried out by a display device.
Fig. 10 is a block diagram showing a hardware configuration of a display device according to a modification.
Fig. 11 is a diagram showing a relation between a tilt of a display device and a rotation of a bladed wheel.
Fig. 12 is a diagram showing an example of a content overview display screen according to a modification.

### Modes for Implementing the Invention

### (1) Embodiment

### (1-1) Configuration

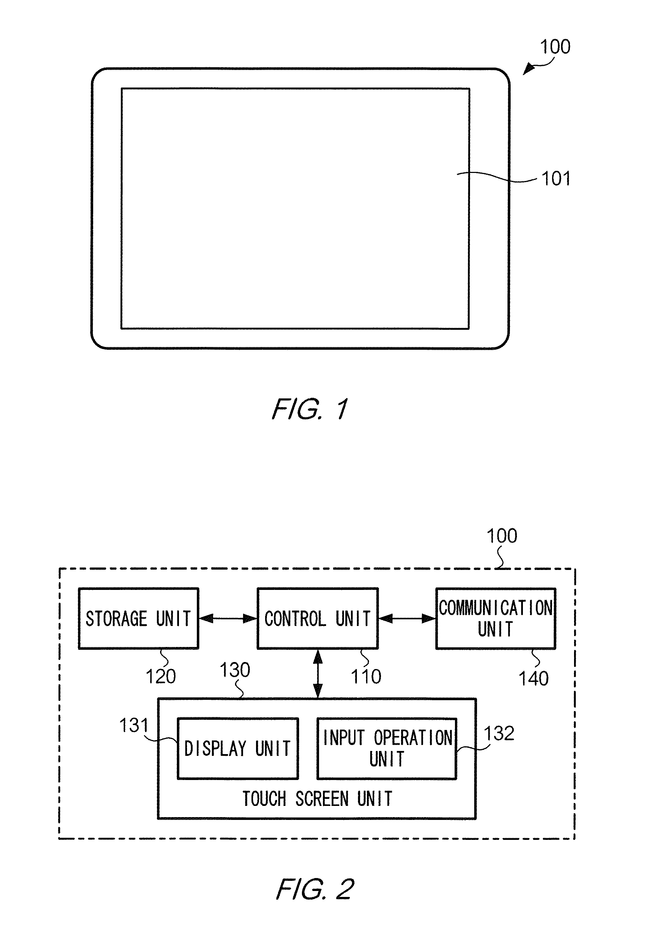

Fig. 1 is a diagram showing an appearance of display device 100 according to an embodiment of the present invention. Display device 100 is an electronic device including display surface 101. Display surface 101 is a surface for displaying an image, and is capable of receiving an input operation performed by a user using a finger. Display surface 101 may be rectangular. Display surface 101 may be a surface that enables a user to view an image stereoscopically by naked-eye stereopsis.

Display device 100 has a size sufficient to enable a user e to perform an input operation using a finger on display surface 101. Display device 100 is, for example, a mobile phone (including a smart-phone), a tablet PC (Personal Computer), a slate PC, or a PDA (Personal Digital Assistant). Display device 100 may be a handheld device or a device that is placed on a table or attached to a holder to facilitate user operation. Display device 100 may not be flat.

Fig. 2 is a block diagram showing a hardware configuration of display device 100. Display device 100 includes at least control unit 110, storage unit 120, touch screen unit 130, and communication unit 140. Display device 100 may include a speaker and a microphone (or an input-output interface for them), a camera (including a video camera), and a vibrator, in addition to the components shown in Fig. 2.

Control unit 110 is a means for controlling operations of components of display device 100. Control unit 110 includes a processor such as a CPU (Central Processing Unit), and a memory such as a ROM (Read Only Memory) or a RAM (Random Access Memory). Control unit 110 executes a program stored in a RAM or storage unit 120 to provide a GUI according to the present invention. Control unit 110 is also able to execute different items of application software (hereinafter referred to as "application") to provide features of the different applications. Control unit 110 may support a multitasking system. Control unit 110 may provide multitasking by multi-core processors.

Storage unit 120 is a means for storing data. Storage unit 120 includes a storage medium such as a hard disk or a flash memory to store data that is used by control unit 110. Storage unit 120 may include a removable disk (or a detachable storage medium). Storage unit 120 stores programs to be used by control unit 110 and image data to be displayed on display surface 101. In a situation where a user uses plural display devices 100, or plural users share a single display device 100, storage unit 120 may store identification data for identifying a user.

Touch screen unit 130 is a means for displaying an image and for accepting an input operation by a user. Touch screen unit 130 specifically includes display unit 131 for displaying an image on display surface 101, and input operation unit 132 for receiving a user's input operation via display surface 101.

Display unit 131 includes a display panel that displays an image using liquid crystal elements or organic EL (electroluminescence) elements, and a drive circuit for driving the display panel. Display unit 131 displays an image on display surface 101, which depends on display data provided from control unit 110. Input operation unit 132 is deposited on display surface 101. Input operation unit 132 includes a sheet-like sensor (input operation surface) that detects a contact of a finger with display surface 101. Input operation unit 132 provides input operation data to control unit 110, which indicates positions at which a contact of a finger with display surface 101 has been detected (hereinafter referred to as "contact points"). A finger is an example of an "indicator" according to the present invention. Input operation unit 132 supports a multi-touch technology whereby the unit is able to detect plural contact points simultaneously.

Communication unit 140 is a means for exchanging data. Communication unit 140 may be an interface for communicating by use of a network such as a mobile communication network or the Internet. Alternatively, communication unit 140 may communicate with other electronic devices without using a network, using a NFC (Near Field Communication) technology. Communication unit 140 may be used, for example, to make valuable transactions such as those using electronic money or an electronic ticket (or an electronic coupon).

The foregoing is a description of a hardware configuration of display device 100.

Display device 100 having the configuration described in the foregoing executes different applications. The applications may include an application for providing news or a weather report, an application for displaying a still or moving image, an application for playing music, a game application, and an application for reading an electronic book. In addition, the applications may include a mailer and a web browser. Further, the applications may include an application that can be run together with another application, and an application that can be run in the background. Still further, the applications may be pre-installed in display device 100, or purchased and acquired from an entity such as a content provider via communication unit 140.

Display device 100 also executes an application to display an overview of plural contents, which are provided by execution of the above applications, and to receive content selected by a user. The application will be referred to as "content overview display application." The content overview display application may be executed when display device 100 is started, or upon receipt of a predetermined input operation performed by a user.

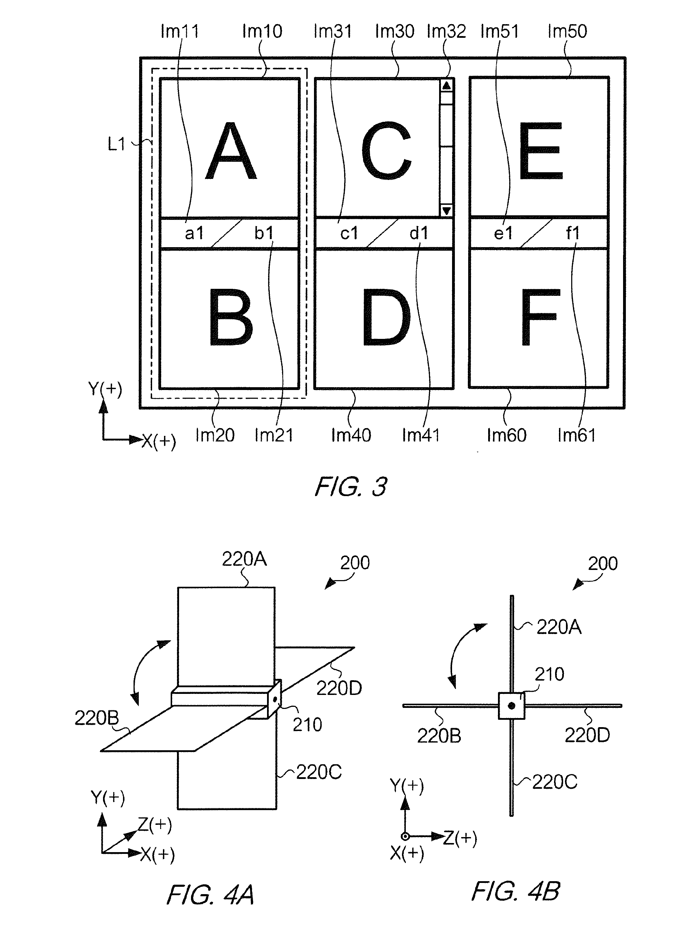

Fig. 3 is a diagram showing an example of a screen displayed by the content overview display application (hereinafter referred to as "content overview display screen"). The screen includes content images Im10, Im20, Im30, Im40, Im50, and Im60, and property images Im11, Im21, Im31, Im41, Im51, and Im61, as shown in the drawing. The content images and the property images will be referred to as "content image" and "property image," respectively, except where it is necessary to specify otherwise.

A content image is a reduced image of a content provided by executing an application. A content herein may be a document or an image (still image or moving image). In the example shown in Fig. 3, images showing "A" to "F" are displayed. A property image is an image showing a property of a content provided as a result of execution of an application. A property herein may be content-related information such as a name of the content or a name of an application that provides the content. In the example shown in Fig. 3, images showing "a1" to "f1" are displayed. It is to be noted that titles "a1" to "fl" are titles allocated for convenience, whereby a correspondence relation between a property image and a content image is clarified. For example, in the example shown in Fig. 3, "a1" shows a property of "A," and "b1" shows a property of "B."

A content image is not necessarily displayed in its entirety on display surface 101. For example, a content image may be browsed in its entirety by use of scroll bar Im32 shown in Fig. 3, which is provided in a content description area (described later). In addition, a content image may be an icon image showing an application that provides a content, instead of a reduced image of a content. An icon image may be predetermined for each application, or generated or selected by a user. Further, a content image may be an advertisement image, which is received from other electronic devices via communication unit 140. Still further, although six content images and six property images are displayed in the example shown in Fig. 3, the number may be less than six or greater than six, as long as it is an even number.

Fig. 4 is a diagram showing an example of a 3D structure, which is constructed when a part surrounded by line L1 shown in Fig. 3 is defined in a virtual 3D space. Fig. 4(a) is an oblique perspective view of the 3D structure, and Fig. 4(b) is a side view of the 3D structure. The 3D structure will be referred to as "bladed wheel 200." It is to be noted that in Fig. 4(b), a symbol of a dot appearing in a white circle indicates an arrow pointing toward the front of the drawing from the back. In other words, according to the viewpoint shown in the drawing, a direction toward the front of X-axis is positive, and a direction toward the rear of X-axis is negative.

Bladed wheel 200 includes rotary shaft 210 and four blades 220A to 220D, as shown in Fig. 4. Below, blades 220A to 220D will be referred to simply as "blade 220," except where it is necessary to specify otherwise. In addition, an image showing bladed wheel 200 will be referred to as "bladed wheel image." Rotary shaft 210 has a rectangular parallelepiped shape, and rotates around a line connecting the centers of gravity of two opposing sides (rotation center line). A bladed wheel image is displayed so that rotary shaft 210 is parallel to display surface 101. Blade 220 has a rectangular-plate shape. A side of blade 220 is fixed to a face of rotary shaft 210 so that the side is parallel to the rotation center line, and a face of blade 220 forms a right angle with the face of rotary shaft 210, to which blade 220 is fixed. Bladed wheel 200 is fixed to each side (except for the faces through which the rotation center line passes) of rotary shaft 210.

Each face (except for the faces through which the rotation center line passes) of rotary shaft 210 has an area for describing a property of a content (hereinafter referred to as "content property description area"), to which a property image is assigned. The content property description area is an example of a "content-related information description area" according to the present invention. For example, in the example shown in Fig. 4, property image Im11 showing "a1" and property image Im21 showing "bl" are assigned to the face in the negative Z-axis direction of rotary shaft 210. It is to be noted that in the example shown in Fig.4, although blade 220B is fixed to the face in the negative Z-axis direction of rotary shaft 210, display of blade 220 vertical to display surface 101 is omitted so as not to obstruct display of a property image.

Each face of blade 220 has a content description area for describing a content, to which a content image is assigned. For example, in the example shown in Fig. 4, content image Im10 showing "A" is assigned to the face in the negative Z-axis direction of blade 220A. Content image Im20 showing "B" is assigned to the face in the negative Z-axis direction of blade 220C. A content image may be assigned to the face in the positive Z-axis direction of blade 220A or to the face in the positive Z-axis direction of blade 220C. Namely, a content image may be assigned to both faces of blade 220. Which content image should be assigned to which face may be determined by a user or by use of an algorithm.

In the example shown in Fig. 4, rotary shaft 210 has a rectangular parallelepiped shape; however, rotary shaft 210 may have any other shape. For example, rotary shaft 210 may have a circular cylindrical shape, or a polygonal columnar shape other than the rectangular parallelepiped shape. Blade 220 has a rectangular-plate shape; however, blade 220 may have any other shape. For example, blade 220 may have a semicircular shape, or a polygonal-plate shape other than the rectangular-plate shape. The number of blades 220 may be one, two, or three, instead of four.

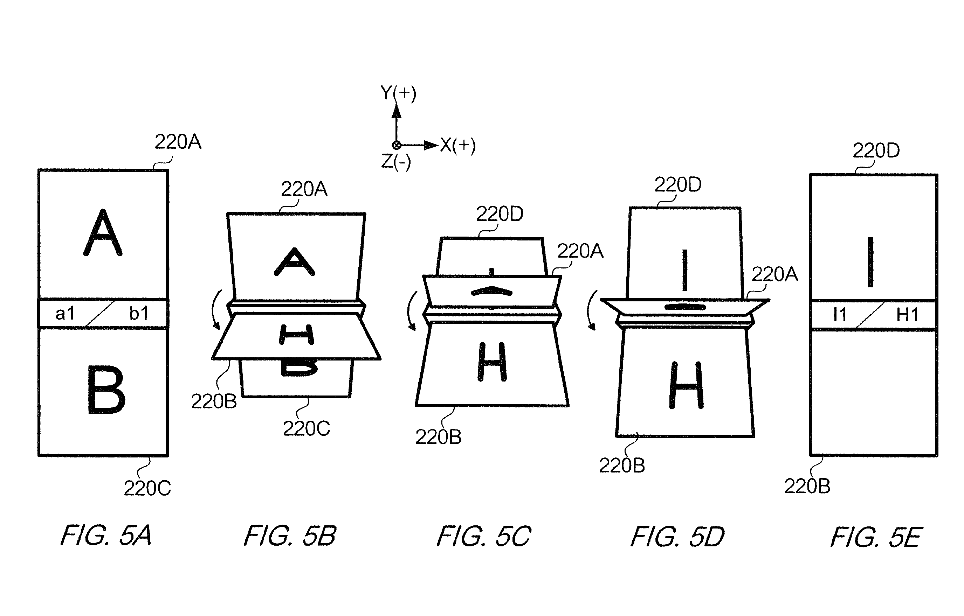

Fig. 5 is a diagram showing rotating bladed wheel 200. The drawing shows bladed wheel 200 to which content images are assigned, to make it easier to understand how bladed wheel 200 rotates. In the example shown in Fig. 5(a), a content image showing "A" is assigned to the face in the negative Z-axis direction of blade 220A, a content image showing "H" is assigned to the face in the positive Y-axis direction of blade 220B, a content image showing "B" is assigned to the face in the negative Z-axis direction of blade 220C, and a content image showing "I" is assigned to the face in the positive Y-axis direction of blade 220D. It is to be noted that in the drawing, a symbol of a cross in a white circle indicates an arrow pointing from the front to the back of the drawing. In other words, according to the viewpoint shown in the drawing, a direction toward the rear of X-axis is positive, and a direction toward the front of X-axis is negative.

In the example shown in Fig. 5(a), when rotary shaft 210 starts to rotate around the rotation center line clockwise, as viewed from the negative X-axis direction, blade 220A starts to lean in the negative Z-axis direction (see Fig. 5(b)). Concurrently, blade 220B starts to lean in the negative Y-axis direction, blade 220C starts to lean in the positive X-axis direction, and blade 220D starts to lean in the positive Y-axis direction. As the rotation proceeds, each blade 220 continues to lean (see Figs. 5(c) and 5(d)). When an angle of the rotation reaches 90 degrees, blade 220D comes to a position previously occupied by blade 220A, and blade 220B comes to a position previously occupied by blade 220C, as shown in Fig. 5(e).

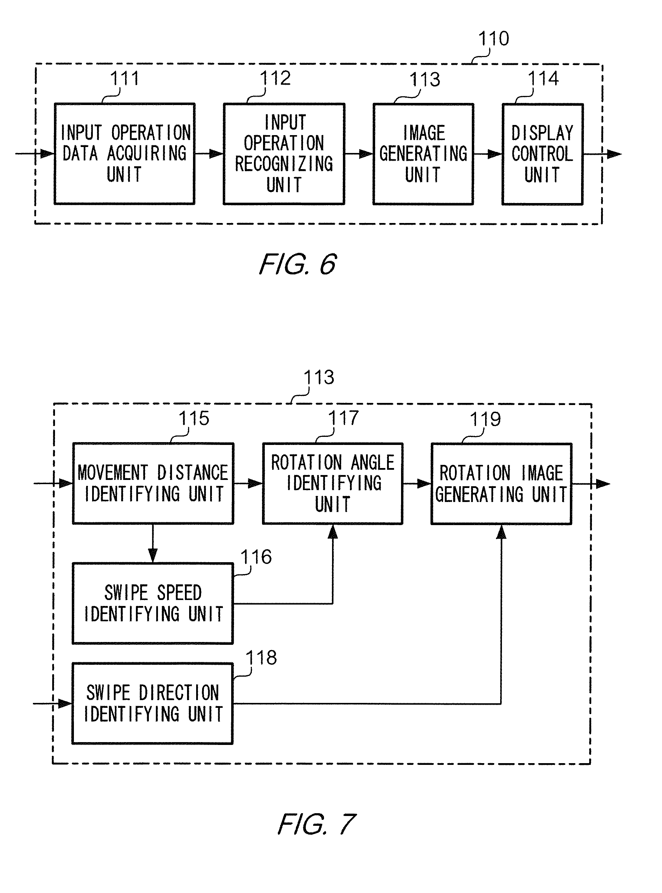

Fig. 6 is a block diagram showing a functional configuration of control unit 110, which relates especially to content overview display. Control unit 110 provides, by executing the content overview display application, functions of input operation data acquiring unit 111, input operation recognizing unit 112, image generating unit 113, and display control unit 114, as shown in the diagram. The functions may be provided by a combination of plural programs. For example, input operation data acquiring unit 111 and input operation recognizing unit 112 may be provided by system software such as an OS (Operating System), instead of an application, and image generating unit 113 and display control unit 114 may be provided by the content overview display application.

Input operation data acquiring unit 111 is a means for acquiring input operation data. Specifically, input operation data acquiring unit 111 acquires input operation data from input operation unit 132 of touch screen unit 130. Input operation data herein indicates a position on display surface 101, which is defined using a 2D orthogonal coordinate system having its origin at a predetermined position (the center or one of the corners) on display surface 101. When a user touches display surface 101 and moves a contact point, input operation data changes moment by moment.

Input operation recognizing unit 112 is a means for recognizing a type of user's input operation based on input operation data acquired by input operation data acquiring unit 111. In the present embodiment, input operation recognizing unit 112 recognizes at least three types of input operations: "tap operation"; "double tap operation"; and "swipe operation." A "tap operation" is an operation where a point on display surface 101 is tapped once within a given time. A "double tap operation" is an operation where a point on display surface 101 is tapped twice within a given time. A "swipe operation" is an operation of moving, for example, a finger, on display surface 101.

Image generating unit 113 is a means for generating an image to be displayed on display unit 131, which image is generated depending on a type of input operation recognized by input operation recognizing unit 112. Specifically, image generating unit 113, when a tap operation has been recognized by input operation recognizing unit 112, generates an image in which a content image to which the tap operation is directed is focused (in other words, an image in which the content image is selected).

When a double tap operation has been recognized by input operation recognizing unit 112, image generating unit 113 generates an image showing transition to a content shown by a content image to which the double tap operation is directed. Specifically, image generating unit 113 generates an image showing a process in which a content image to which the double tap operation is directed is enlarged to occupy the entire display surface 101.

When a swipe operation has been recognized by input operation recognizing unit 112, and the trajectory of the swipe operation (specifically, the trajectory of a contact point between the input operation surface and a finger used for the swipe operation) crosses rotary shaft 210 of a bladed wheel image, image generating unit 113 generates an image showing rotating bladed wheel 200, which is shown by a bladed wheel image to which the swipe operation is directed. A detailed description of the processing will be provided later. On the other hand, when a swipe operation has been recognized by input operation recognizing unit 112, and the trajectory of the swipe operation does not cross rotary shaft 210 of a bladed wheel image, image generating unit 113 generates an image showing a process in which a content image to which the swipe operation is directed is scrolled.

Display control unit 114 causes display unit 131 to display an image generated by image generating unit 113.

Fig. 7 is a block diagram showing a processing carried out by image generating unit 113, which relates especially to generation of an image showing rotating bladed wheel 200. Among the functions shown in the drawing, movement distance identifying unit 115 is a means for identifying a movement distance of a finger when a swipe operation is performed. Specifically, movement distance identifying unit 115 identifies the length of a trajectory of a contact point between a finger and display surface 101 when a swipe operation is performed, based on input operation data acquired by input operation data acquiring unit 111. Swipe speed identifying unit 116 is a means for identifying a movement speed of a finger (swipe speed) when a swipe operation is performed. Specifically, swipe speed identifying unit 116 identifies a swipe speed by dividing a movement distance identified by movement distance identifying unit 115 by a time required for the movement.

Rotation angle identifying unit 117 is a means for identifying an angle (rotation angle) by which bladed wheel 200 should be rotated, based on outputs from movement distance identifying unit 115 and swipe speed identifying unit 116. For example, rotation angle identifying unit 117 may identify a rotation angle by multiplying a movement distance identified by movement distance identifying unit 115, a value of a swipe speed identified by swipe speed identifying unit 116, and a predetermined coefficient. Swipe direction identifying unit 118 is a means for identifying a direction of movement of a finger (swipe direction) when a swipe operation is performed. Specifically, swipe direction identifying unit 118 resolves the vector of a swipe operation into an X-axis component and a Y-axis component based on input operation data acquired by input operation data acquiring unit 111, and determines whether the swipe operation is a swipe operation in the positive Y-axis direction or a swipe operation in the negative Y-axis direction.

Rotation image generating unit 119 is a means for generating an image showing rotating bladed wheel 200 based on outputs from rotation angle identifying unit 117 and swipe direction identifying unit 118. Specifically, rotation image generating unit 119 generates an image showing bladed wheel 200, which rotates in a direction identified by rotation angle identifying unit 117, by a rotational angle identified by swipe direction identifying unit 118. When bladed wheel 200 rotates, the size and shape of a content image assigned to blade 220 of bladed wheel 200, as well as a point of view relative to the content image, changes according to an angle of the rotation.

The foregoing is a description of a configuration of the present embodiment.

### (1-2) Operation

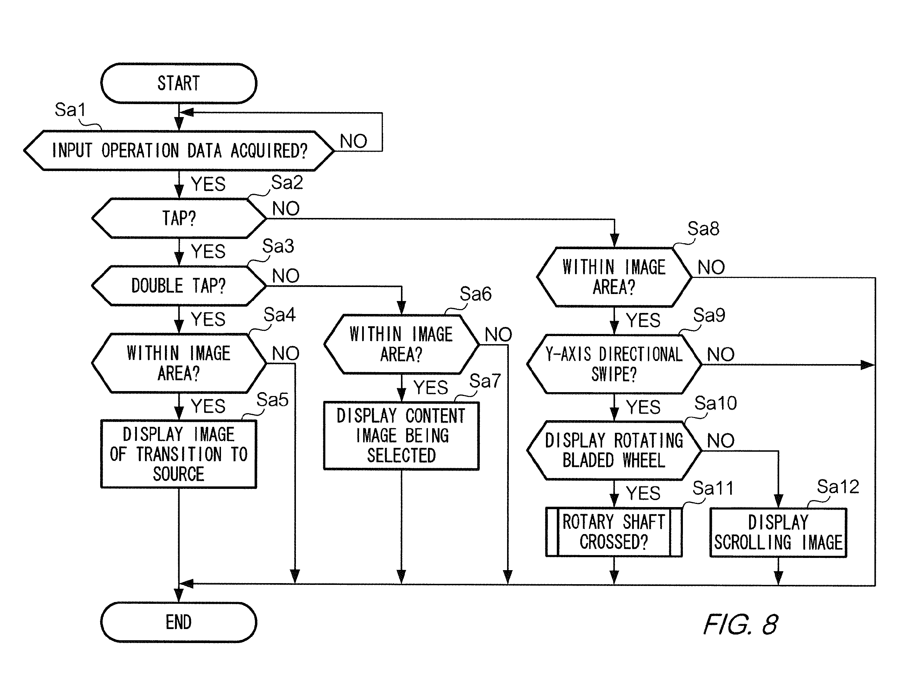

Fig. 8 is a flowchart showing a display control procedure carried out by control unit 110 of display device 100. The procedure is carried out when a content overview display screen is displayed as shown in Fig. 3. At step Sa1 of the procedure, control unit 110 determines whether input operation data has been acquired. If the result of the determination is negative (step Sa1; NO), control unit 110 stands by. On the other hand, if the result of the determination is affirmative (step Sa1; YES), control unit 110 determines whether an input operation represented by the acquired input operation data is a tap operation (step Sa2).

Specifically, control unit 110 determines whether an input operation performed by tapping at a point on display surface 101 has occurred one or more times within a given time, based on the acquired input operation data. If the result of the determination is affirmative (step Sa2; YES), control unit 110 determines whether the input operation represented by the acquired input operation data is a double tap operation (step Sa3). Specifically, control unit 110 determines whether an input operation performed by tapping has occurred at a point on display surface 101 twice within a given time, based on the acquired input operation data.

If the result of the determination is affirmative (step Sa3; YES), control unit 110 determines whether the input operation is directed to a content image (step Sa4). Specifically, control unit 110, by comparing the acquired input operation data (the position of a contact point) with a display area of each content image displayed on display unit 131, determines whether the contact point falls within a display area of a content image.

If the result of the determination is affirmative (step Sa4; YES), control unit 110 causes display unit 131 to display an image showing transition to a content shown by a content image to which the input operation is directed (step Sa5). On the other hand, if the result of the determination is negative (step Sa4; NO), control unit 110 does not change the display screen.

If it is determined at step Sa3 that the input operation is not a double tap operation (in other words, the input operation is a tap operation) (step Sa3; NO), control unit 110 determines whether the input operation is directed to a content image (step Sa6). Specifically, control unit 110, by comparing the acquired input operation data (the position of a contact point) with a display area of each content image displayed on display unit 131, determines whether the contact point falls within a display area of a content image.

If the result of the determination is affirmative (step Sa6; YES), control unit 110 causes display unit 131 to display an image in which a content image to which the input operation is directed is focused (in other words, an image in which the content image is selected) (step Sa7). On the other hand, if the result of the determination is negative (step Sa6; NO), control unit 110 does not change the display screen.

If it is determined at step Sa2 that the input operation is not a tap operation (in other words, the input operation is a swipe operation) (step Sa2; NO), control unit 110 determines whether the input operation is directed to a content image (step Sa8). Specifically, control unit 110, by comparing the acquired input operation data (the position of a contact point) with a display area of each content image displayed on display unit 131, determines whether the contact point falls within a display area of a content image.

If the result of the determination is affirmative (step Sa8; YES), control unit 110 determines whether the input operation is a swipe operation along the Y-axis direction (see Fig. 3) (step Sa9). Specifically, control unit 110 resolves the vector of the input operation into an X-axis component and a Y-axis component, and if the Y-axis component is greater than the X-axis component, determines that the input operation is a swipe operation along the Y-axis direction. If the result of the determination is affirmative (step Sa9; YES), control unit 110 determines whether the trajectory of the swipe operation crosses rotary shaft 210 of a bladed wheel image (step Sa10).

If the result of the determination is affirmative (step Sa10; YES), control unit 110 causes display unit 131 to display an image showing rotating bladed wheel 200, which is shown by a bladed wheel image to which the swipe operation is directed (step Sa11). A detailed description of the processing will be provided later. On the other hand, if the result of the determination is negative (step Sa10; NO), control unit 110 causes display unit 131 to display an image showing a process in which a content image to which the swipe operation is directed is scrolled (step Sa12).

It is to be noted that if the result of the determination at step Sa8 or Sa9 is negative, control unit 110 does not change the display screen.

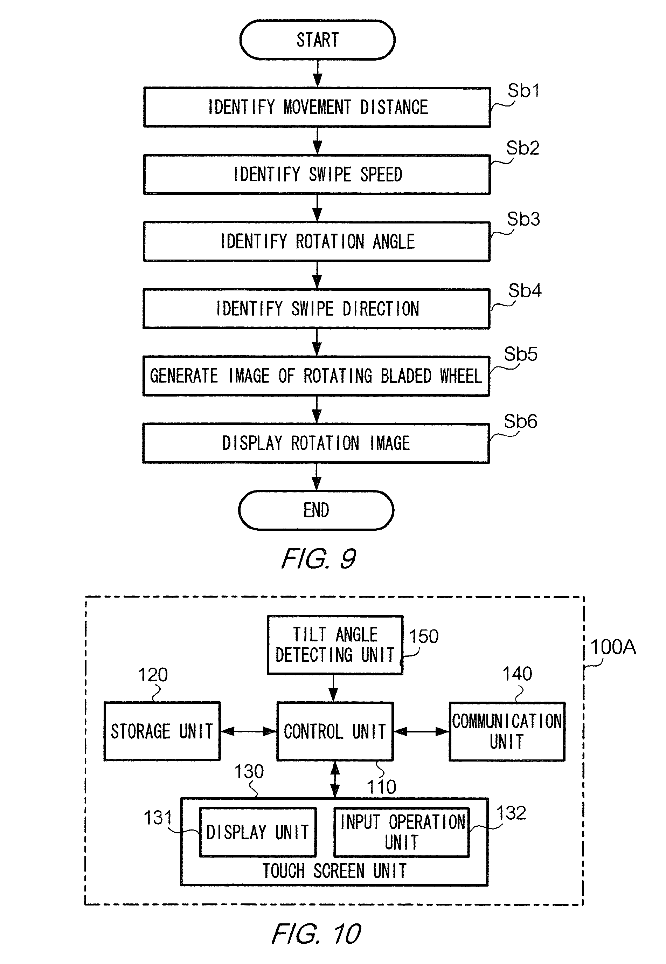

Fig. 9 is a flowchart showing a processing for displaying rotating bladed wheel 200. At step Sb1 shown in the drawing, control unit 110 identifies a movement distance of a finger when a swipe operation is performed. Specifically, control unit 110 identifies the length of a trajectory of a contact point between a finger and display surface 101 when a swipe operation is performed, based on input operation data acquired at step Sa1 of Fig. 8. Subsequently, control unit 110 identifies a movement speed of the finger when the swipe operation is performed (step Sb2). Specifically, control unit 110 identifies a movement speed by dividing the movement distance identified at step Sb1 by a time required for the movement.

Subsequently, control unit 110 identifies an angle (rotation angle) by which bladed wheel 200 should be rotated (step Sb3). Specifically, control unit 110 may identify a rotation angle by multiplying the movement distance identified at step Sb1, a value of the speed identified at step Sb2, and a predetermined coefficient. Subsequently, control unit 110 identifies a direction of movement of the finger when the swipe operation is performed (step Sb4). Specifically, control unit 110 resolves the vector of the swipe operation into an X-axis component and a Y-axis component based on the input operation data acquired at step Sa1 shown in Fig. 8, and determines whether the swipe operation is a swipe operation in the positive Y-axis direction or a swipe operation in the negative Y-axis direction.

Subsequently, control unit 110 generates an image showing rotating bladed wheel 200 (step Sb5). Specifically, control unit 110 generates an image showing bladed wheel 200, which rotates in the direction identified at step Sb4, by a rotational angle identified at step Sb3. Subsequently, control unit 110 causes display unit 131 to display the generated image (step Sb6).

The foregoing is a description of a display control procedure according to the present embodiment.

It is to be noted that in the above display control procedure, an extent to which the image is scrolled at step Sa12 may be determined based on the movement distance and the movement speed of the finger when the swipe operation is performed. Specifically, an extent of scrolling may be determined by multiplying the movement distance identified at step Sb1, a value of the speed identified at step Sb2, and a predetermined coefficient. In addition, a direction in which the image is scrolled at step Sa 12 may be determined based on a direction in which the finger is moved when the swipe operation is performed. A direction of movement of the finger may be determined in the same way as in step Sb4.

As described in the foregoing, using display device 100 according to the present embodiment, a user is able to switch content images on the screen by swiping a bladed wheel image to rotate the bladed wheel. In addition, a user is able to change a content image to be displayed on the screen by changing a direction of the swipe operation. In the example shown in Fig. 3, a total of twenty-four content images can be switched and browsed by only swipe operations. Accordingly, by use of display device 100 according to the present embodiment, a user interface with high operability and high browsability is provided.

### (2) Modifications

The above embodiment may be modified as described below. The following modifications may be combined with each other.

### (2-1) Modification 1

Display device 100 according to the above embodiment may be further provided with tilt angle detecting unit 150 for detecting a tilt angle of the device. Display device 100 may rotate bladed wheel 200 according to a tilt angle detected by tilt angle detecting unit 150. Fig. 10 is a block diagram showing a hardware configuration of display device 100A according to the present modification. Tilt angle detecting unit 150 may be, specifically, an acceleration sensor.

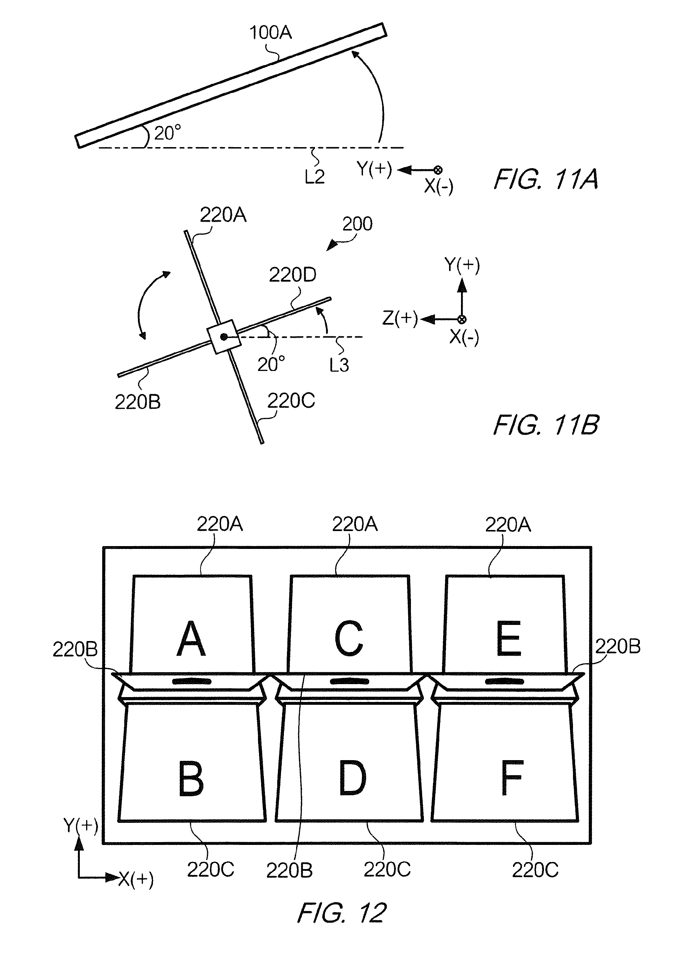

If display device 100A having tilt angle detecting unit 150 is tilted at 20 degrees as shown in Fig. 11(a), bladed wheel 200 may be rotated by 20 degrees as shown in Fig. 11(b). In Fig. 11, line L2 is a line perpendicular to a direction of gravity force, and line L3 is a line perpendicular to display surface 101. As a result of the operation, a screen shown in Fig. 12 is displayed on display unit 131. In the example of Fig. 12, a user of display device 100A is able to view a content image assigned to a face in the negative Y-axis direction of blade 220B by tilting display device 100A. It is to be noted that a tilt angle of display device 100A and a rotation angle of bladed wheel 200 may not necessarily be the same. There may be any correlation between them.

### (2-2) Modification 2

In the above embodiment, a rotation speed of bladed wheel 200 may be determined based on the number of content description areas in which a content is described. For example, in a case where six content images are assigned to bladed wheel 200, a rotation speed of bladed wheel 200 may be faster than in a case where two content images are assigned to bladed wheel 200. In this case, control unit 110 may, when generating an image of rotating bladed wheel 200, identify the number of content images assigned to bladed wheel 200, read a rotation speed corresponding to the number of content images from storage unit 120, and generate an image of bladed wheel 200 rotating at the rotation speed.

### (2-3) Modification 3

In the above embodiment, a scroll bar is provided in a content description area, and if the trajectory of a user's swipe operation does not cross rotary shaft 210 of bladed wheel 200, an image of scrolling a content is displayed (see step Sa12 of Fig. 8). However, in the above embodiment, a scroll bar may not be provided in a content description area, and if a user performs a swipe operation along the Y-axis direction, an image of rotating bladed wheel 200 may be displayed, regardless of whether the trajectory of the swipe operation crosses rotary shaft 210 of bladed wheel 200. Namely, in the above embodiment, step Sa10 may be omitted, and if the result of the determination at step Sa9 is affirmative, step Sa11 may be carried out.

### (2-4) Modification 4

In the above embodiment, input operation unit 132 is deposited on display surface 101. However, input operation unit 132 may not necessarily be deposited on display surface 101. Input operation unit 132 may be provided as a touch-pad (or track pad, slide pad).

### (2-5) Modification 5

In the above embodiment, where a user operates display device 100 using his/her finger, a user may operate display device 100 using an indicator such as a stylus, instead of a finger. In this case, input operation unit 132 may detect a position of an indicator using infrared or ultrasound. If an indicator is provided with a magnetic material at its end, input operation unit 132 may magnetically detect a position of the indicator. In the above embodiment, touch screen unit 130 may be of a capacitance type, so that it is able to detect a position of a finger approaching display surface 101.

### (2-6) Modification 6

In the above embodiment, the present invention is applied to a display device. However, the present invention may be applied to an electronic device such as a game machine, a music player, or an electronic book reader, instead of a display device. The present invention may be implemented by, instead of a display device alone, cooperation between a display device including at least a display unit and another device (specifically a device for controlling the display device) independent of the display device. In this case, the other device may not be provided with a display unit or an input operation unit, as long as it is provided with the functional configurations shown in Figs. 6 and 7. A program for providing the functional configuration shown in Fig. 6 or 7 may be downloaded and installed to an electronic device from a server device.

### (2-7) Modification 7

In the above embodiment, a side of blade 220 of bladed wheel 200 is fixed to a face of rotary shaft 210. However, a side of blade 220 may not be fixed to a face of rotary shaft 210, and only blades 220 may be rotated around the rotation center line of rotary shaft 210. Also, in the above embodiment, blade 220 is fixed to a face of rotary shaft 210 so that a side of blade 220 is parallel to the rotation center line of rotary shaft 210. However, a side of blade 220 may not necessarily be parallel to the rotation center line. Blade 220 may be fixed to rotary shaft 210 so that a side of blade 220 is inclined relative to the rotation center line.

### Description of Reference Numerals

100 ··· display device, 101 ··· display surface, 110 ··· control unit, 111 ··· input operation data acquiring unit, 112 ··· input operation recognizing unit, 113 ··· image generating unit, 114 ··· display control unit, 115 ··· movement distance identifying unit, 116 ··· swipe speed identifying unit, 117 ··· rotation angle identifying unit, 118 ··· swipe direction identifying unit, 119 ··· rotation image generating unit, 120 ··· storage unit, 130 ··· touch screen unit, 131 ··· display unit, 132 ··· input operation unit, 140 ··· communication unit, 150 ··· tilt angle detecting unit 150

## Claims

1. A display device, comprising:
a display unit including a display surface that displays an image;
an input operation unit including an input operation surface that receives an input operation by an operator through contact via an indicator; and
a display control unit that causes the display unit to display a bladed wheel image showing a bladed wheel having plural blades, and that when a predetermined input operation is received by the input operation unit, causes the display unit to display an image showing the bladed wheel in a state of rotation, wherein:
the display control unit causes the display unit to display the bladed wheel image so that a rotary shaft of the bladed wheel is parallel to the display surface; and
the bladed wheel has a content description area in which a content is described, on a face of at least one of the plural blades.

2. The display device according to Claim 1, wherein a side each of the plural blades of the bladed wheel is fixed to the rotary shaft parallel to the rotary shaft

3. The display device according to Claim 1 or 2, wherein the bladed wheel has, on a face of the rotary shaft, a content-related information description area in which information related to the content described in the content description area is described.

4. The display device according to Claim 3, wherein the bladed wheel has a content description area in which a content is described, on both faces of at least one of the plural blades.

5. The display device according to Claim 4, wherein when the display control unit causes the display unit to display an image showing the bladed wheel in a state of rotation, the display control unit increases a speed of the rotation as a number of content description areas in which a content is described increases.

6. The display device according to Claim 5, wherein:
the content description area has a scroll bar;
when the input operation received by the input operation unit is a swipe operation, which is an operation of moving the indicator on the input operation surface, and a trajectory of a contact point between the indicator used for the swipe operation and the input operation surface crosses the rotary shaft of the bladed wheel, the display control unit causes the display unit to display an image showing the bladed wheel in a state of rotation; and
when the trajectory does not cross the rotary shaft of the bladed wheel, the display control unit causes the display unit to display an image of scrolling a content described in the content description area.

7. The display device according to Claim 6, further comprising a tilt angle detecting unit that detects a tilt angle of the display device, wherein the display control unit causes the display unit to display an image of the bladed wheel rotating in accordance with the tilt angle detected by the tilt angle detecting unit.

8. A user interface method implemented in a display device having a display unit including a display surface that displays an image, and an input operation unit including an input operation surface that receives an input operation by an operator via contact with an indicator, the user interface method comprising:
causing the display unit to display a bladed wheel image showing a bladed wheel having plural blades; and
when a predetermined input operation is received by the input operation unit, causing the display unit to display an image showing the bladed wheel in a state of rotation, wherein:
the bladed wheel image is displayed so that a rotary shaft of the bladed wheel is parallel to the display surface; and
the bladed wheel has a content description area in which a content is described, on a face of at least one of the plural blades.

9. A program executed in a computer of a display device having:
a display unit including a display surface that displays an image; and
an input operation unit including an input operation surface that receives an input operation by an operator through a contact with an indicator,
the program:
causing the display unit to display a bladed wheel image showing a bladed wheel having plural blades; and
when a predetermined input operation is received by the input operation unit, causing the display unit to display an image showing the bladed wheel in a state of rotation, wherein:
the bladed wheel image is displayed so that a rotary shaft of the bladed wheel is parallel to the display surface; and
the bladed wheel has a content description area in which a content is described, on a face of at least one of the plural blades.
